# EUROPEAN PATENT APPLICATION

(11) **EP 3 933 804 A1**
(43) Date of publication of application: **05.01.2022**
(21) Application number: 19918027.4
(22) Date of filing: 13.12.2019
(51) Int. Cl.: G08G 1/14, G06Q 50/30

(54) **PARKING LOCATION CHECKING SYSTEM**

(30) Priority: 05.03.2019 KR 20190025044
(71) Applicant: ParkingCloud Co., Ltd., Seoul Yeongdeungpo-gu 07276 (KR); Lee, Hwa Jin, Seoul 06000 (KR)
(72) Inventor: SHIN, Sang Yong, Seoul 07548 (KR); LEE, Hwa Jin, Seoul 06000 (KR)
(74) Representative: Forresters IP LLP
(86) International application number: PCT/KR2019/017710
(87) International publication number: WO 2020/179992

(57) **Abstract**

A parking location checking system installed in a vehicle according to an embodiment of the present disclosure includes: an electronic device including at least one communication circuit and at least one processor; at least one base station; at least one server communicatively connected to the at least one base station and including a database that stores therein information of the vehicle; and one or more user devices communicatively connected to the at least one server and linked to the vehicle. The electronic device is configured to transmit a first signal to the at least one base station by using the at least one communication circuit, and the at least one base station is configured to receive the first signal and transmit a second signal to the at least one server in response to the received first signal, and the at least one server is configured to receive the second signal and transmit a third signal to the user device in response to the received second signal, and the user device is configured to receive the third signal and provide a user of the user device with parking location information of the vehicle based on the received third signal. There can be various other embodiments.

## Description

### TECHNICAL FIELD

The present disclosure relates to a parking location checking system. More specifically, in the present disclosure, a system that detects a parking location of a vehicle without a user's separate manipulation when the user gets off the vehicle and provides a user device with the parking location for the user to check the parking location is described.

### BACKGROUND

Unless otherwise indicated herein, the materials described in this section are not prior art to the claims in this application and are not admitted as prior art by inclusion in this section.

Due to advances in electronic control technology, various vehicular devices, which have been conventionally operated through mechanical methods, are now operated by electrical methods for the enhancement of driver convenience and safety. Also, vehicle systems are gradually becoming more advanced. Further, recently, a vehicle has been equipped with a telematics device to provide a smart control service that enables remote air conditioning, unlocking and locking of vehicle doors, parking location check, destination transmission, and vehicle status check with a smartphone, safety and security services such as emergency dispatch service, anti-theft tracking service, and burglar alarm service, a driving service that guides the fastest route by using real-time traffic information, and a vehicle management service that conducts a vehicle condition diagnosis and informs whether the vehicle needs to be repaired.

Despite the advancement of the existing telematics technology, users still have to remember their parking location to check the parking location. A blinking function that continuously blinks a light mounted on the vehicle or a chirp sound-making function that continuously generates a short and loud signal sound through a speaker mounted on the vehicle at a distance has been used to check the parking location. However, according to the above-described methods, it is difficult to recognize the exact direction and distance of the vehicle, and when the vehicle is far away from the user, it may be more difficult to find the location of the vehicle.

### DISCLOSURE OF THE INVENTION

In view of the foregoing, the present disclosure provides a vehicle user with a system that automatically checks a parking location of a vehicle at the time of parking and provides the user with the checked parking location through a user device by using a telematics device in addition to the above-described services. For example, a space for parking vehicles can be large and complex with multiple floors. In such a space, the users may forget to remember a parking location, or even if the user remembers the parking location, he/she may have a difficulty in recalling the exact location. Accordingly, the present disclosure provides a system that enables a vehicle to directly check a parking location and provide it to a user device even without an active action of a user.

According to an embodiment of the present disclosure, a parking location checking system installed in a vehicle includes: an electronic device including at least one communication circuit and at least one processor; at least one base station; at least one server communicatively connected to the at least one base station and including a database that stores therein information of the vehicle; and one or more user devices communicatively connected to the at least one server and linked to the vehicle. The electronic device may be configured to transmit a first signal to the at least one base station by using the at least one communication circuit, and the at least one base station may be configured to receive the first signal and transmit a second signal to the at least one server in response to the received first signal, and the at least one server may be configured to receive the second signal and transmit a third signal to the user device in response to the received second signal, and the user device may be configured to receive the third signal and provide a user of the user device with parking location information of the vehicle based on the received third signal.

According to an embodiment, the processor included in the electronic device may be configured to generate location information related to a parking location of the vehicle by using location determination technology, and the first signal may contain the location information.

According to an embodiment, the at least one server may be configured to generate location information related to a parking location of the vehicle based on the received second signal by using location determination technology, and the third signal may contain the location information.

According to an embodiment, the location determination technology may employ at least any one of Cell ID method, Enhanced Cell ID method, Angle of Arrival (AOA) method, Time of Arrival (TOA) method, Time Difference of Arrival (TDOA) method, or Received Signal Strength Indication (RSSI) method.

According to an embodiment, the user device may receive the location information related to the parking location of the vehicle, match the location information in map data of a parking space related to the location information, and display the map data and the matched location information on a display device included in the user device.

According to an embodiment, the at least one server may be configured to further transmit parking space information containing the map data of the parking space related to the location information to the user device.

According to an embodiment, the user device may be further configured to transmit a signal for requesting parking space information to the at least one server if the parking space information containing the map data of the parking space related to the location information is not stored in the user device.

According to an embodiment, the at least one server may be configured to receive the signal for requesting the parking space information and transmit the requested parking space information to the user device.

According to an embodiment, the electronic device may be further configured to transmit the first signal in response to a vehicle location confirmation input. The vehicle location confirmation input may be at least one of an input to a mechanical button installed at the vehicle, an input to an icon displayed on a display device installed at the vehicle, a voice input received through a microphone installed at the vehicle, or an input from the user device.

According to an embodiment, the electronic device may be further configured to transmit the first signal at every predetermined period, and the at least one base station may be further configured to receive the first signal and transmit the second signal to the at least one server every predetermined period in response to the received first signal, and the at least one server may be further configured to receive the second signal transmitted every predetermined period, generate location information related to the parking location of the vehicle and transmit the third signal including the generated location information to the user device every predetermined period.

According to an embodiment, a parking location checking method to be performed by at least one server includes: a process of receiving a signal transmitted from the vehicle through at least one base station; a process of generating location information related to a parking location of the vehicle based on the received signal transmitted from the vehicle by using location determination technology; and a process of transmitting a signal including the location information to a user device linked to the vehicle.

According to an embodiment, in the parking location checking method to be performed by at least one server, the location determination technology may employ at least any one of Cell ID method, Enhanced Cell ID method, Angle of Arrival (AOA) method, Time of Arrival (TOA) method, Time Difference of Arrival (TDOA) method or Received Signal Strength Indication (RSSI) method.

According to an embodiment, the parking location checking method to be performed by at least one server may further include: a process of receiving a signal for requesting parking space information containing map data of a parking space related to the location information from the user device; and a process of transmitting the requested parking space information to the user device.

### BRIEF DESCRIPTION OF THE DRAWINGS

The foregoing and other features of the present disclosure will be described in detail with reference to the accompanying drawings. Understanding that these drawings depict only several examples in accordance with the disclosure and are, therefore, not to be considered limiting of its scope, the disclosure will be described with additional specificity and detail through the use of the accompanying drawings, in which:

FIG. 1 is a schematic diagram illustrating a parking location checking system, in accordance with an embodiment of the present disclosure;
FIG. 2 is a functional block diagram of an electronic device included in the parking location checking system, in accordance with an embodiment of the present disclosure;
FIG. 3 is a flowchart showing a parking location checking process performed by the system, in accordance with an embodiment of the present disclosure;
FIG. 4 illustrates an operation example of an in-vehicle electronic device included in the system, in accordance with an embodiment of the present disclosure;
FIG. 5 is a flowchart showing at least a part of the parking location checking process performed by the system, in accordance with an embodiment of the present disclosure.
FIG. 6 is a schematic diagram of the system further including a vehicle access control system, in accordance with an embodiment of the present disclosure.
FIG. 7 is a flowchart showing at least a part of a process performed by the parking location checking system shown in FIG. 6; and
FIG. 8 is a flowchart showing at least a part of a parking location checking process performed by a system, in accordance with another embodiment of the present disclosure.

### BEST MODE FOR CARRYING OUT THE INVENTION

Hereafter, embodiments and examples will be described in detail with reference to the accompanying drawings so that the present disclosure may be readily implemented by those skilled in the art. However, it is to be noted that the present disclosure is not limited to the embodiments and examples but can be embodied in various other ways.

The present disclosure relates to a parking location checking system. More specifically, in the present disclosure, a system that detects a parking location of a vehicle without a user's separate manipulation when the user gets off the vehicle and provides a user device with the parking location for the user to check the parking location is described.

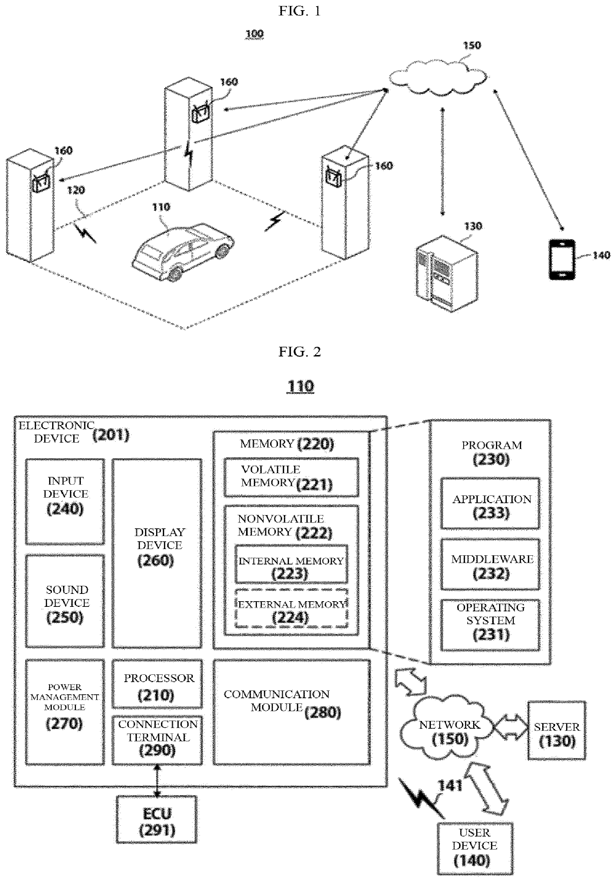

**FIG. 1** is a schematic diagram illustrating a system for in-vehicle payment, in accordance with an embodiment of the present disclosure. A server 130 may be any computing device having an application server, a standalone server, a web server, other data transmission/reception functions, data identification functions and data processing functions. A network 150 may be composed of any device having a computer network, the Internet, a telephone network, a TCP/IP data network (including WAN, LAN, VPN, etc.) and other communication functions.

A vehicle 110 may be configured to communicate with an external device. For example, vehicle 110 may be configured to communicate with server 110, at least one base station 160 and a user device 140. The communication with the external device may be carried out through a network 150. For example, network 150 may include a long-range wireless network, a short-range wireless network, or a wired network. Vehicle 110 may perform or receive various services, such as payment service and parking location checking service, through the communication with the external device. Vehicle 110 may enter a specific area, for example, a parking lot 120, and the entry of vehicle 110 into parking lot 120 may be confirmed (hereinafter, specific area 120 may also be referred to as parking lot 120). Vehicle 110 may check where vehicle 110 is located in parking lot 120 by using various location determination technologies such as GPS (global positioning system), WPS (wi-fi positioning system), CPS (cellular positioning system) and triangulation. For example, vehicle 110 may check the parking location by using triangulation performed by at least one base station 160 installed inside parking lot 120. The location determination technology may employ at least one of Cell ID method, Enhanced Cell ID method, Angle of Arrival (AOA) method, Time of Arrival (TOA) method, Time Difference of Arrival (TDOA) method, or Received Signal Strength Indication (RSSI) method.

At least one base station 160 may include a base station according to various communication protocols, such as a base station for CPS, an access point (AP) for WPS and a beacon. In another embodiment, at least one base station 160 may be installed outside parking lot 120. The communication between the external device and vehicle 110 to provide a parking location checking service will be described in detail later.

Server 130 may be used for a parking location checking service. For example, server 130 may acquire absolute location information of vehicle 110 from vehicle 110 or at least one base station 160, and generate parking location information based on the received location information and parking space information about specific area 120 (for example, parking lot) in which vehicle 110 is located. Server 130 may transmit the generated parking location information to user device 140 to allow the user to receive a parking location checking service through user device 140.

Further, server 130 may generate payment information by collecting fees to be charged, and server 130 may be configured to be associated with a payment system to enable the charged fees to be paid and settled. The payment information may include parking fee information based on parking time, discount information and other payment information. The other payment information may include fee information about a car wash system installed in parking lot 120, fee information about an electric vehicle charging system installed in parking lot 120, and payment information in a specific place (for example, a repair shop, a shopping mall, etc.) to which parking lot 120 belongs, but is not limited to the examples described herein.

**FIG. 2** is a functional block diagram of an electronic device for implementing in-vehicle payment, in accordance with an embodiment of the present disclosure. Referring to **FIG. 2****,** an electronic device 201 installed inside vehicle 110 may communicate with user device 140 or server 130 through network 150 (for example, a long-range wireless communication network) or communicate with user device 140 through a short-range wireless communication network 141. According to an embodiment, electronic device 201 may communicate with electronic device 201 through server 130.

According to an embodiment, electronic device 201 may include a processor 210, a memory 220, an input device 240, a sound device 250, a display device (or display) 260, a power management module 270, or a communication module 280. In some embodiments, at least one of the components (for example, display device 260) may be omitted or one or more other components may be added to electronic device 201. In some embodiments, some of the components may be implemented with a single integrated circuit. For example, input device 240 (for example, a touch circuitry) may be implemented to be embedded in display device 260.

Processor 210 may control at least one other component (for example, a hardware or software component) of electronic device 201 connected to processor 210 by executing, for example, software (for example, a program 230) and may perform various data processing or calculations. According to an embodiment, as at least a part of the data processing or calculations, processor 210 may load an instruction or data received from another component (for example, input device 240 or a communication module 190) to volatile memory 221, process the instruction or data stored in volatile memory 221, and store the resultant data in a nonvolatile memory 222. According to an embodiment, processor 210 may include a main processor (for example, a central processing unit or an application processor) and an auxiliary processor (for example, a graphic processing unit, an image signal processor, a sensor hub processor, or a communication processor) which may operate independently from the main processor or together with the main processor. Additionally or alternatively, the auxiliary processor may use lower power than the main processor or may be configured to specialize in a predetermined function. The auxiliary processor may be implemented separately from the main processor or as a part of the main processor.

Memory 220 may store various data used by at least one component (for example, processor 210) of electronic device 201. The data may include, for example, software (for example, program 230) and input data or output data on an instruction related thereto. Memory 220 may include volatile memory 221 or nonvolatile memory 222.

Program 230 may be stored in memory 220 and may include, for example, an operating system 231, middleware 232, or an application 233.

Input device 250->240 may receive an instruction or data to be used by the component (for example, processor 210) of electronic device 201 from the outside (for example, the user) of electronic device 201. Input device 250->240 may include, for example, a touch panel and a physical input mean with button-type or dial-type.

Sound device 250 may output a sound signal to the outside of electronic device 201 or receive a sound signal. Sound device 250 may include, for example, a speaker or a recorder. The speaker may be used for general purposes, such as reproducing multimedia or recording, and the recorder may be used for receiving a voice instruction of the user. According to an embodiment, the recorder may be implemented separately from the speaker or as a part of the speaker.

Display device 260 may visually provide information to the outside (for example, the user) of electronic device 201. Display device 260 may include, for example, a display, a hologram device, a projector, and a control circuit for controlling the corresponding device. According to an embodiment, display device 260 may include a touch circuitry configured to detect a touch, or a sensor circuit (for example, a pressure sensor) configured to measure the intensity of force generated by the touch.

Power management module 270 may manage power supplied to electronic device 201. According to an embodiment, power management module 270 may be implemented as at least a part of, for example, a power management integrated circuit (PMIC). According to an embodiment, electronic device 201 may manage power supplied from the outside (for example, vehicle 110) and/or power of an internal battery through power management module 270. For example, power management module 270 may charge the internal battery with power supplied from vehicle 110 and may supply power to electronic device 201 and charge the internal battery at the same time.

Communication module 280 may support establishment of a direct (for example, wired) communication channel or a wireless communication channel between electronic device 201 and an external electronic device (for example, user device 140 or server 130) and communication through the established communication channel. Communication module 190 may include one or more communication processors that operate independently from processor 210 (for example, the application processor) and support direct (for example, wired) communication or wireless communication. According to an embodiment, the communication module may include a wireless communication module (for example, a cellular communication module, a short-range wireless communication module, or a global navigation satellite system (GNSS) communication module) or a wired communication module (for example, a local area network (LAN) communication module or a power line communication module). Among these communication modules, the corresponding communication module may communicate with the external electronic device through network 121 (for example, a long-range communication network such as a cellular network, Internet, or a computer network (for example, LAN or WAN))) or a short-range network 122 (for example, a short-range communication network such as Bluetooth, Wi-Fi direct or infrared data association (IrDA)). Such various types of communication modules may be integrated into one component (for example, a single chip) or may be implemented with a plurality of separate components (for example, a plurality of chips).

A connection terminal 290 may include a connector that physically connects electronic device 201 to an ECU 291. ECU 291 may be configured to control all vehicle operations, such as driving, braking and steering, of vehicle 110. For example, ECU 291 may be configured to control an engine, an automatic transmission, an anti-lock brake system (ABS), and the like. In another embodiment, ECU 291 may be included in electronic device 201. In yet another embodiment, ECU 291 may function as processor 210 of electronic device 201 or function as a substitute for processor 210.

At least some of the components may be connected to each other through a communication scheme between peripheral devices (for example, a bus, general purpose input and output (GPIO), a serial peripheral interface (SPI), or a mobile industry processor interface (MIPI)) and may exchange signals (for example, instruction or data) therebetween.

According to an embodiment, an instruction or data may be transmitted or received between electronic device 201 and user device 140 through server 130 connected to network 150. User device 140 may be electronic device 201 and various types of electronic devices. User device 140 may include, for example, a portable communication device (for example, a smartphone), a computer device, a portable multimedia device, a portable medical device, a camera, a wearable device, or a home appliance. User device 140 is not limited to the above-described devices.

The term "module" as used herein may include a unit implemented with hardware, software, or firmware, and may be used interchangeably with the term, for example, "logic," "logical block," "component," "circuit," or the like. The module may be an integrated component, or a minimum unit for performing one or more functions or a part thereof. For example, according to an embodiment, a module may be implemented in the form of an application-specific integrated circuit (ASIC).

Various embodiments disclosed herein may be implemented by software (for example, a program 240) including one or more instructions stored in a machine (for example, electronic device 201)-readable storage medium (for example, an internal memory 236 or an external memory 238). For example, the machine (for example, a processor (for example, processor 210) of electronic device 201) may retrieve at least one of the one or more instructions from the storage medium and execute the retrieved at least one instruction. This enables the device to operate to perform at least one function according to the retrieved at least one instruction. One or more instructions may include a code that is generated by a compiler or executed by an interpreter. The machine-readable storage medium may be provided in the form of a non-transitory storage medium. Here, the term "non-transitory" only means that the storage medium is tangible without including a signal, irrespective of whether data are semi-permanently or transitorily stored in the storage medium.

According to an embodiment, the method according to various embodiments disclosed herein may be included and provided in a computer program product. The computer program product may be traded as a product between a seller and a buyer. The computer program product may be distributed in the form of a machine-readable storage medium (for example, compact disc read only memory (CD-ROM)), or may be distributed online via an application store (for example, Play Store^{™}) or between two user devices (for example, a navigation device and a smartphone). If distributed online, at least a part of the computer program product may be temporarily generated or temporarily stored in the machine-readable storage medium, such as memory of the manufacturer's server, a server of the application store or a relay server.

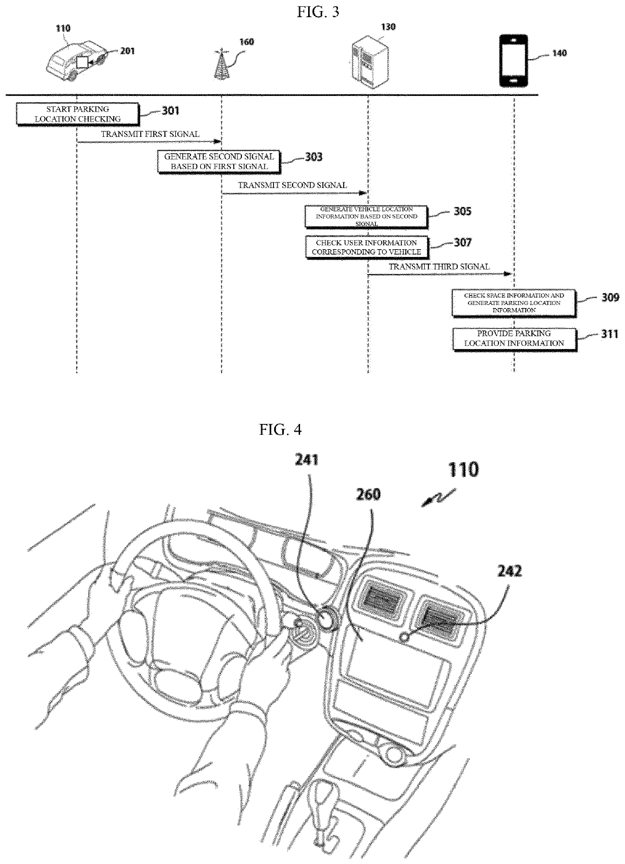

**FIG.** 3 is a flowchart showing a parking location checking process performed by the system, in accordance with an embodiment of the present disclosure. The flowchart of **FIG. 3** is based on an algorithm implemented on vehicle 110, server 130, user device 140 and at least one base station 160 shown in **FIG. 1****.** Hereinafter, each component of electronic device 201 of vehicle 110 shown in **FIG. 2** is used to explain each process of **FIG. 3****,** but the processes are not necessarily limited to the components shown in **FIG. 2****.**

A process may begin at block 301 where electronic device 201 starts parking location checking based on parking of vehicle 110 into a specific area (for example, parking lot 120 in **FIG. 1**). Here, the term "parking location checking" may refer to an operation of triggering or starting vehicle 110 to check a parking location by itself when the user parks vehicle 110 in a specific area (for example, parking lot 120 in **FIG. 1**) that provides a parking location checking service. In other words, electronic device 201 (or vehicle 110) may detect a situation in which the parking location needs to be checked and start a series of operations for checking the parking location by itself. When the parking location checking is started, electronic device 201 installed in vehicle 110 may control at least some related components (for example, communication module 280) for providing a service capable of checking the location of vehicle 110. For example, processor 210 of electronic device 201 may be activated to control at least some of the components even when vehicle 110 is turned off. As another example, electronic device 201 may further include an auxiliary processor capable of controlling at least some of the components of electronic device 201 while the processor is in an inactive (for example, sleep) state in a vehicle entry state.

According to an embodiment, when electronic device 201 detects a stop of the engine, electronic device 201 may start parking location checking. According to another embodiment, when electronic device 201 detects an operation of a hand brake (also referred to as a parking brake or a side brake) after the engine is stopped, electronic device 201 may start parking location checking. According to yet another embodiment, when electronic device 201 receives a signal for locking the doors of vehicle 110 transmitted from an external electronic device (for example, user device 140 in **FIG. 1** or a remote controller), electronic device 201 may start parking location checking. Electronic device 201 may receive information about vehicle driving from ECU 291 of vehicle 110 in order to detect a stop and a start of the engine.

In some embodiments, electronic device 201 may start parking location checking through a user input to input device 240 installed in vehicle 110. This will be described in detail with reference to **FIG. 4****.** For example, vehicle 110 may include a separate physical key (for example, a button 241 in **FIG. 4**) for starting parking location checking. Physical key 241 may include a push button or a dial key. Electronic device 201 may start parking location checking when detecting a user input to physical key 241.

In another embodiment, electronic device 201 may start parking location checking in response to a user input on an interface displayed on display device 260. Referring to **FIG. 4****,** vehicle 110 may include display device 260 capable of interacting with the user. Electronic device 201 may display an interface for starting parking location checking and an icon for starting parking location checking through display device 260. Electronic device 201 may start parking location checking when receiving a user input (for example, a touch input) to the icon.

In yet another embodiment, vehicle 110 may start parking location checking in response to the user's voice input through a microphone (for example, 242 in FIG. 4). For example, when electronic device 201 may start parking location checking when detecting receipt of a predetermined specific voice input (for example, the user's voice saying "parking location checking!").

When parking location checking is started, electronic device 201 may transmit a first signal through communication module 280. The first signal may be transmitted to at least one base station 160 through a long-range wireless network. The first signal may be transmitted according to a preset communication protocol with at least one base station. The first signal may be used by the system according to an embodiment of the present disclosure to check the location of electronic device 201. According to an embodiment, signals transmitted and received between electronic device 201 and at least one base station may be cellular communication signals such as LTE signals, and each signal may contain control information PDCCH and data PDSCH. The data PDSCH may include data for measuring the location of vehicle 110. In another embodiment, if at least one base station is a beacon, electronic device 201 may broadcast the first signal. However, as in an embodiment described below, if electronic device 201 and at least one base station 160 already know each other as communication partners, the first signal may contain, for example, destination information in a header to perform unicast.

In some embodiments, electronic device 201 and at least one base station 160 may bidirectionally transmit and receive a plurality of signals. In some embodiments, the first signal may be first transmitted from at least one base station 160 to electronic device 201. By using bidirectional signal transmission and reception, information for specifying the location of vehicle 110 (or electronic device 201) or tracking the location of vehicle 110 (or electronic device 201) in real-time may be generated. Location determination technology for specifying or tracking the location of vehicle 110 may employ at least one of Cell ID method, Enhanced Cell ID method, Angle of Arrival (AOA) method, Time of Arrival (TOA) method, Time Difference of Arrival (TDOA) method or Received Signal Strength Indication (RSSI) method. According to the AOA method, each of at least three base stations 160 measures a phase of a signal depending on the received incident angle of a signal (for example, first signal) transmitted from electronic device 201, calculates an incident angle using the distance and phase difference between base stations 160 and measures the location of electronic device 201 using the calculated incident angle. The TOA method uses transmission time of a signal, and according to the TOA method, under the assumption that all of at least three base stations 160 are correctly time-synchronized, the arrival time of a signal from electronic device 201 to each of base stations 160 is measured to measure the location of electronic device 201. The RSSI method is a method of tracking the location by measuring the strength of a signal, and according to the RSSI method, the intensity of a signal (for example, first signal) received from electronic device 201 by three base stations 160 is measured to track the location of electronic device 201. In another embodiment, the first signal may contain direct location information (for example, coordinate information) about electronic device 201 directly measured by electronic device 201 using a GPS or the like.

Then, the process may continue to block 303 where at least one base station 160 receives the first signal from electronic device 201 (or vehicle 110) and generates a second signal. The second signal may be generated based on the first signal received from electronic device 201 by at least one base station 160. For example, the second signal may contain at least one of first signals as it is, or may be generated by collecting only data necessary to generate vehicle location information from the first signal. The second signal may include information (for example, device identifier, identification number) of electronic device 201 that has transmitted the first signal or information (for example, vehicle plate number) of vehicle 110 including electronic device 201. This is to measure the object of vehicle location information to be generated, that is, to measure which vehicle is parked.

The process may continue to block 405 where server 130 generates vehicle location information based on the second signal received from at least one base station 160. Here, the term "vehicle location information" may refer to two-dimensional or three-dimensional absolute location information or two-dimensional or three-dimensional absolute coordinates of vehicle 110 (or electronic device 201). In the vehicle location information, the coordinate space may use a standard local coordinate system or a world coordinate system. Alternatively, in the vehicle location information, the coordinate space may be a unique coordinate space designed to check a parking location. The vehicle location information may be two-dimensional location information, or may be three-dimensional location information further containing height (altitude) information.

The embodiment is not limited to the above description, and the vehicle location information may be generated by electronic device 201 installed in vehicle 110 and at least one base station 160, and server 130 may receive the vehicle location information directly or indirectly from electronic device 201 or at least one base station 160.

The process may continue to block 307 where server 130 checks user information corresponding to the vehicle based on the second information received from at least one base station 160. However, the embodiment is not limited thereto, and block 307 for checking user information corresponding to the vehicle may be performed earlier than block 305 for generating vehicle location information, or blocks 305 and 307 may be performed simultaneously.

Server 130 may check user information corresponding to the vehicle based on the second signal received at block 307. The second signal may contain information for identifying vehicle 110, for example, a vehicle plate number, data on an identifier of vehicle 110, or electronic device 201. Server 130 may retrieve user information corresponding to the information for identifying vehicle 110 from a database DB. The user information may contain information of user device 140 of the user of vehicle 110 (for example, a phone number, a device identifier, or an email address). Server 130 may transmit a third signal to user device 140 based on the confirmed user information. The third signal may contain the vehicle location information generated by server 130.

The process may continue to block 309 where user device 140 checks the space information and generates parking location information. User device 140 may match the vehicle location information to the parking space information based on the third signal received from server 130. Here, a reference point of the vehicle location information may be matched to a reference point of the parking space information to check a relative location of vehicle 110 in specific area 120. For example, when the vehicle location information indicates coordinates (x1, y1, z1), user device 140 may check where the coordinates (x1, y1, z1) are located in specific area 120. For example, when the vehicle location information indicates the coordinates (x1, y1, z1), user device 140 may confirm that vehicle 110 has been parked in a specific parking zone (A1-1) on a parking lot floor (second basement floor) in a specific area 120. In the process, the vehicle location information may be matched to the parking space information and then, the parking location information may be generated.

Then, the process may continue to block 409 where user device 140 provides the parking location information. According to an embodiment, user device 140 may provide the user with the parking location information based on the generated parking location information. For example, user device 140 may display, on the display device, an interface configured to allow the user to check the parking location. The interface for checking the parking location may include a height of vehicle parking (floor number in the parking lot), a parking location (zone number), the user's current location and a route to the parking location.

In another embodiment, user device 140 may further provide a voice signal for checking the parking location through the sound device. For example, user device 140 may provide guidance on the route from the current location to the parking location in the form of a voice signal. In another embodiment, user device 140 may provide a sound signal which changes, for example, the magnitude of which increases the sound changes as the user's current location becomes closer to the parking location.

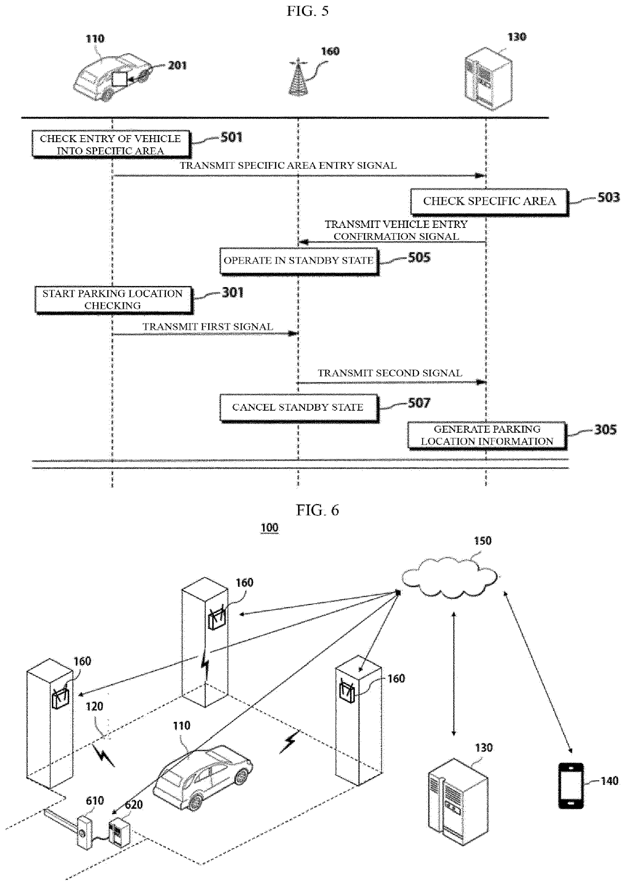

**FIG. 5** is a flowchart showing at least a part of the parking location checking process performed by the system, in accordance with an embodiment of the present disclosure. The flowchart of **FIG. 5** relates to a process implemented on vehicle 110, server 130 and at least one base station 160 shown in **FIG. 1****.** A detailed description of the process already described in **FIG. 3** may be omitted.

A process may begin at block 601 where entry of electronic device 201 (or vehicle 110) into specific area 120 is checked. According to an embodiment, electronic device 201 may check by itself whether it has entered specific area 120 by using a global positioning system (GPS). Electronic device 201 may previously store location information of at least one area that provides a parking location checking service. Electronic device 201 may periodically check the current location and may check whether it has entered an area that provides a parking location checking service. According to another embodiment, electronic device 201 may check whether it has entered specific area 120 based on a signal from the outside through network 150 or short-range wireless communication network 141. For example, when vehicle 110 passes through a specific passage or vehicle access control system, electronic device 201 receives a signal indicating that vehicle 110 has entered specific area 120 from a local network communication device installed in the specific passage or vehicle access control system. After confirming the entry into specific area 120, electronic device 201 may transmit a signal indicating that it has entered specific area 120 to server 130.

Then, at block 503, server 130 may identify specific area 120 which electronic device 201 (or vehicle 110) that transmits the specific area entry signal has entered. Server 130 may transmit a vehicle entry confirmation signal to operate in a standby state for checking the parking location to at least one base station 160 matched to identified specific area 120. For example, server 130 may store an identifier (for example, a cell identifier) of at least one base station allocated to each specific area 120 for a parking location checking service. As another example, server 130 may check a public land mobile network (PLMN) corresponding to vehicle 110 and may transmit a vehicle entry confirmation signal to at least one base station belonging to the corresponding PLMN around specific area 120. Server 130 may transmit a vehicle entry confirmation signal to such at least one base station directly or via another server.

Then, the process may continue to block 505 where at least one base station 160 operates in a standby state. At least one base station 160 may operate in a standby state in response to the vehicle entry confirmation signal received from server 130. Here, the term "standby state" refers to an operation state capable of receiving the first signal transmitted from vehicle 110 (or electronic device 201) based on starting the parking location checking (block 301).

For example, at least one base station 160 may operate in a power-saving mode and then operate in an active mode when receiving the vehicle entry confirmation signal transmitted from server 130. As another example, at least one base station 160 may acquire information of incoming vehicle 110 (or electronic device 201) included in the transmitted vehicle entry confirmation signal. At least one base station 160 may allow access of incoming vehicle 110 (or electronic device 201) based on the acquired information of vehicle 110 while operating in a standby state. As yet another example, at least one base station 160 may periodically track the location of vehicle 110 (or electronic device 201) while operating in a standby state. At least one base station 160 may first transmit a specific signal to vehicle 110 (or electronic device 201) and then receive a response signal from vehicle 110 to track the location of vehicle 110 (or electronic device 201).

Thereafter, at least one base station 160 may transmit the second signal generated based on the first signal to server 130 and then, the process may continue to block 507 where the standby state is canceled. When at least one base station 160 transmits the second signal, there is no operation to be performed, and, thus, the standby state may be canceled. When the standby state is canceled, at least one base station 160 may return to the power saving mode or may stop periodically transmitting a certain signal to vehicle 110 (or electronic device 201) to track the location of vehicle 110 in real -time.

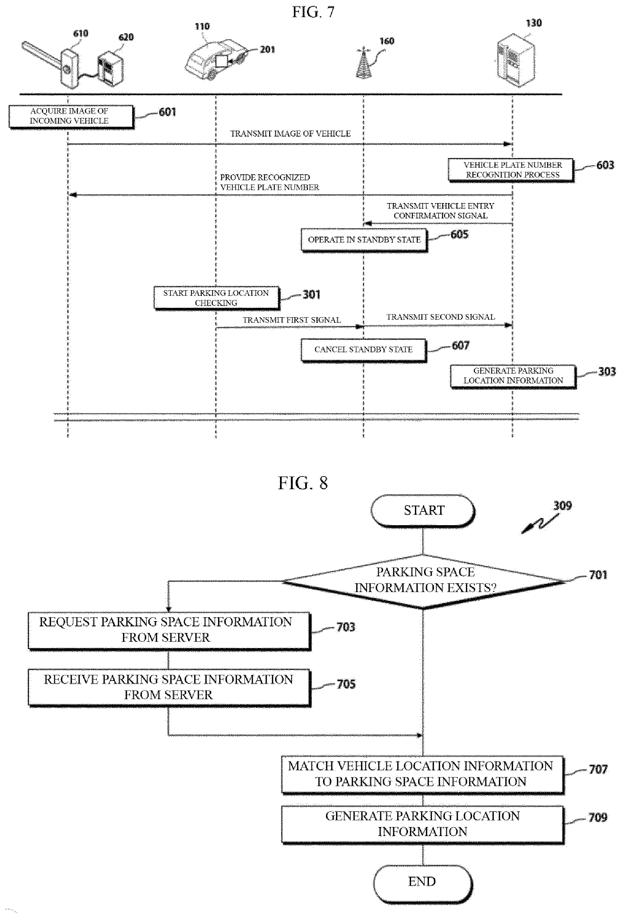

**FIG. 6** is a schematic diagram of the system further including a vehicle access control system, in accordance with an embodiment of the present disclosure. FIG. 7 is a flowchart showing at least a part of a process performed by the parking location checking system shown in **FIG. 6****.** The flowchart of **FIG. 7** relates to a process implemented when a vehicle access control system 610 installed at the entrance of specific area 120 is further included in addition to vehicle 110, server 130 and at least one base station 160 shown in **FIG. 1****.** A detailed description of the process already described in **FIG. 3** may be omitted.

A process may begin at block 601 where vehicle plate number images of incoming vehicle 110 are acquired when vehicle 110 passes through vehicle access control system 610 to enter a specific area (for example, parking lot 120 in **FIG. 1**). Vehicle access control system 610 may acquire images of incoming vehicle 110. The images of the vehicle may include front and/or rear images of vehicle 110 and may include a license plate of the vehicle. Vehicle access control system 610 may recognize a vehicle plate number of vehicle 110 based on the acquired vehicle plate number images. When under-recognition of the vehicle plate number of vehicle 110 occurs, vehicle access control system 610 may transmit the acquired vehicle plate number images to server 130 in order to check the vehicle plate number. The vehicle plate number images may be transmitted to server 130 directly or via another server (for example, a local server).

Then, at block 603, server 130 may recognize the vehicle plate number by using the received vehicle plate number images. Server 130 may check the vehicle plate number based on the received vehicle plate number images by using big data technology, cloud computing technology, distributed computing technology, client-server computing technology, or machine-learning technology.

According to an embodiment, server 130 may provide the checked vehicle plate number to vehicle access control system 610. Also, server 130 may transmit a vehicle entry confirmation signal to operate in a standby state for checking the parking location to vehicle access control system 610 that has transmitted the vehicle plate number images and/or to at least one base station 160 matched to the checked vehicle plate number. For example, server 130 may transmit a vehicle entry confirmation signal to at least one base station, at least one AP, and at least one beacon corresponding to vehicle access control system 610 that has transmitted the vehicle plate number images. Server 130 may store an identifier (for example, a cell identifier) of at least one base station allocated to each vehicle access control system 610 for a parking location checking service. As another example, server 130 may check the user's PLMN corresponding to the checked vehicle plate number and transmit a vehicle entry confirmation signal to at least one base station belonging to the corresponding PLMN around vehicle access control system 610 (or specific area 120). Server 130 may transmit a vehicle entry confirmation signal to such at least one base station directly or via another server (for example, a local server 620).

However, the embodiment is not limited thereto, and the vehicle entry confirmation signal for at least one base station 160 may be transmitted directly from vehicle access control system 610 or via another server (for example, local server 620). This may occur when vehicle access control system 610 accurately recognizes the vehicle plate number of vehicle 110.

Then, the process may continue to block 605 where at least one base station 160 operates in a standby state. At least one base station 160 may operate in a standby state in response to the vehicle entry confirmation signal received from server 130. Here, the term "standby state" refers to an operation state capable of receiving the first signal transmitted from vehicle 110 (or electronic device 201) based on starting the parking location checking (block 401).

For example, at least one base station 160 may operate in a power-saving mode and then operate in an active mode when receiving the vehicle entry confirmation signal transmitted from server 130. As another example, at least one base station 160 may acquire information of incoming vehicle 110 (or electronic device 201) included in the transmitted vehicle entry confirmation signal. At least one base station 160 may allow access of incoming vehicle 110 (or electronic device 201) based on the acquired information of vehicle 110 while operating in a standby state. As yet another example, at least one base station 160 may periodically track the location of vehicle 110 (or electronic device 201) while operating in a standby state. At least one base station 160 may first transmit a specific signal to vehicle 110 (or electronic device 201) and then receive a response signal from vehicle 110 to track the location of vehicle 110 (or electronic device 201).

Thereafter, at least one base station 160 may transmit the second signal generated based on the first signal to server 130 and then, the process may continue to block 607 where the standby state is canceled. When at least one base station 160-1, 160-2 or 160-3 transmits the second signal, there is no operation to be performed, and, thus, the standby state may be canceled. When the standby state is canceled, at least one base station 160 may return to the power saving mode or may stop periodically transmitting a certain signal to vehicle 110 (or electronic device 201) to track the location of vehicle 110 in real -time.

**FIG. 8** is a flowchart showing at least a part of a parking location checking process performed by a system, in accordance with another embodiment of the present disclosure. **FIG.** 8 may be a detailed flowchart of block 409 for checking parking space information and generating parking location information in the flowchart of **FIG. 3****.**

At block 701, user device 140 may check whether parking space information exists. In other words, user device 140 may check whether the parking space information for specific area 120 where vehicle 110 has entered or has been parked is stored in a memory or database of user device 140. According to an embodiment, if it is determined that parking space information exists, the process may continue to block 707 where the parking space information is matched to vehicle location information.

According to an embodiment, if it is determined that parking space information does not exist, the process may continue to block 703 where parking space information is requested from server 130. Specifically, user device 140 may transmit, to server 130, a signal to request transmission of parking space information of specific area 120 where vehicle 110 has been parked. Then, user device 140 may receive the parking space information transmitted by server 130 in response to the signal to request transmission of parking space information. The received parking space information may be stored in the memory or database. Then, the process may continue to block 707 where the parking space information is matched to vehicle location information.

At block 707, user device 140 may match the vehicle location information to the parking space information based on the third signal received from server 130. Here, a reference point of the vehicle location information may be matched to a reference point of the parking space information to check a relative location of vehicle 110 in specific area 120. For example, when the vehicle location information indicates coordinates (x1, y1, z1), user device 140 may check where the coordinates (x1, y1, z1) are located in specific area 120. For example, when the vehicle location information indicates the coordinates (x1, y1, z1), user device 140 may confirm that vehicle 110 has been parked in a specific parking zone (A1-1) on a parking lot floor (second basement floor) in specific area 120. The process may continue to block 709 where the vehicle location information is matched to the parking space information and then, the parking location information is generated.

User device 140 may generate parking location information at block 709. User device 140 may match the vehicle location information to the parking space information based on the third signal received from server 130. Here, a reference point of the vehicle location information may be matched to a reference point of the parking space information to check a relative location of vehicle 110 in specific area 120. For example, when the vehicle location information indicates coordinates (x1, y1, z1), user device 140 may check where the coordinates (x1, y1, z1) are located in specific area 120. For example, when the vehicle location information indicates the coordinates (x1, y1, z1), user device 140 may confirm that vehicle 110 has been parked in a specific parking zone (A1-1) on a parking lot floor (second basement floor) in specific area 120. In the process, the vehicle location information may be matched to the parking space information and then, the parking location information may be generated.

In this way, the user can check a parking location through the user device by using the system for providing a parking location checking service according to the present disclosure even without memorizing the parking location or without the user's special manipulation to remember the parking location. Also, a business operator providing a specific area as a parking space can provide a parking location checking service in a specific area while minimizing the addition of new facilities by using the system of the present disclosure.

In particular, the parking location checking service of the present disclosure provides a system that enables electronic device 201 installed in vehicle 110 to communicate directly with an external device, for example, server 130 or at least one base station 160, through network 150 and check a parking location even without the user's manipulation.

The above description of the present disclosure is provided for the purpose of illustration, and it would be understood by those skilled in the art that various changes and modifications may be made without changing technical conception and essential features of the present disclosure. For example, the specific area has been described above as a parking lot of a complex shopping mall, but the specific area may be a space, such as a concert hall, a drive-in theater, a festival site, in which a parking space is provided but it is difficult for the user to remember a parking location. It is clear that the above-described embodiments are illustrative in all aspects and do not limit the present disclosure. For example, each component described to be of a single type can be implemented in a distributed manner. Likewise, components described to be distributed can be implemented in a combined manner.

In addition, in the embodiments described in the present disclosure, processes, such as generating vehicle location information, matching the vehicle location information to parking space information including map data, and generating parking location information, may be performed by respective components (for example, electronic device 201 installed in vehicle 110, server 130, local server 620, user device 140, and at least one base station 160) constituting the system. The processes are performed by different components, respectively. Thus, it is obvious to those skilled in the art that signals containing information and/or data that may be added between the components can be transmitted and received.

There is little distinction left between hardware and software implementations of aspects of systems; the use of hardware or software is generally a design choice representing cost vs. efficiency tradeoffs. There are various vehicles by which processes and/or systems and/or other technologies described herein can be effected (e.g., hardware, software, and/or firmware), and that the preferred vehicle will vary with the context in which the processes and/or systems and/or other technologies are deployed. For example, if an implementer determines that speed and accuracy are paramount, the implementer may opt for a mainly hardware and/or firmware vehicle; if flexibility is paramount, the implementer may opt for a mainly software implementation; or, yet again alternatively, the implementer may opt for some combination of hardware, software, and/or firmware.

In the implementation of software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments of the present invention as defined by the appended claims and/or disclosed herein.

The programs (software modules or software) may be stored in nonvolatile memories including a random-access memory and a flash memory, a read-only memory (ROM), an electrically erasable programmable read-only memory (EEPROM), a magnetic disc storage device, a compact disc-ROM (CD-ROM), digital versatile discs (DVDs), or other type optical storage devices, or a magnetic cassette. Alternatively, any combination of some or all of the may form a memory in which the program is stored. Further, a plurality of such memories may be included in the electronic device.

Further, the programs may be stored in an attachable storage device that is accessible through a communication network, such as the Internet, the Intranet, a local area network (LAN), wide LAN (WLAN), or storage area network (SAN), or a communication network configured with a combination thereof. The storage devices may be connected to an electronic device through an external port. Furthermore, a separate storage device on the communication network may access a device that performs an embodiment of the present disclosure.

In the above-described detailed embodiments of the present disclosure, the number of elements included in the present disclosure is expressed in the singular or the plural according to a presented detailed embodiment. However, the singular form or plural form is selected for convenience of description suitable for the presented situation, and various embodiments of the present disclosure are not limited to a single element or multiple elements thereof. Further, multiple elements expressed in the description may be configured into a single element or a single element in the description may be configured into multiple elements.

Although the embodiment has been described in the detailed description of the present disclosure, the present disclosure may be modified in various forms without departing from the scope of the present disclosure. Therefore, the scope of the present disclosure should not be defined as being limited to the embodiments, but should be defined by the appended claims and equivalents thereof.

While certain example techniques have been described and shown herein using various methods and systems, it should be understood by those skilled in the art that various other modifications may be made, and equivalents may be substituted, without departing from claimed subject matter. Additionally, many modifications may be made to adapt a particular situation to the teachings of claimed subject matter without departing from the central concept described herein. Therefore, it is intended that claimed subject matter not be limited to the particular examples disclosed, but that such claimed subject matter also may include all implementations falling within the scope of the appended claims, and equivalents thereof.

Throughout this document, the term "connected to" may be used to designate a connection or coupling of one element to another element and includes both an element being "directly connected to" another element and an element being "electronically connected to" another element via another element. Through the whole document, the term "on" that is used to designate a position of one element with respect to another element includes both a case that the one element is adjacent to the other element and a case that any other element exists between these two elements. Further, through the whole document, the term "comprises or includes" and/or "comprising or including" used in the document means that one or more other components, steps, operation and/or existence or addition of elements are not excluded in addition to the described components, steps, operation and/or elements unless context dictates otherwise. Through the whole document, the term "about or approximately" or "substantially" is intended to have meanings close to numerical values or ranges specified with an allowable error and intended to prevent accurate or absolute numerical values disclosed for understanding of the present disclosure from being illegally or unfairly used by any unconscionable third party.

The scope of the present disclosure is defined by the following claims rather than by the detailed description of the embodiment. It shall be understood that all modifications and embodiments conceived from the meaning and scope of the claims and their equivalents are included in the scope of the present disclosure.

## Claims

1. An electronic device installed inside a vehicle, comprising:
at least one communication circuit;
a display;
at least one processor operatively connected to the display and the communication circuit; and
at least one memory electrically connected to the processor,
wherein the memory is configured to store an application program including a user interface, and
the memory stores instructions configured, when executed,
to causes the processor to operate in a vehicle entry state when entry of the vehicle into a specific area is confirmed,
to request payment information from a server through the communication circuit when a payment initiation condition is confirmed while operating in the vehicle entry state,
to receive the payment information through the communication circuit,
to provide, through the display, an interface for payment based on the received payment information, and
to request a payment from the server through the communication circuit when a payment confirmation input is detected on the displayed interface.

2. The electronic device of Claim 1,
wherein the entry into the specific area is confirmed when an entry approval signal is received from the server through a long-range wireless communication network based on a passage of the vehicle through a vehicle access control system installed in the specific area.

3. The electronic device of Claim 1,
wherein the entry into the specific area is confirmed when an entry approval signal is received from a vehicle access control system installed in the specific area through a short-range wireless communication network based on a passage of the vehicle through the vehicle access control system.

4. The electronic device of Claim 1,
wherein the payment initiation condition includes at least one of when an engine start of the vehicle is detected, when the vehicle is driven for a predetermined period or more after the engine start, and when a payment request input from a user is detected.

5. The electronic device of Claim 2,
wherein the payment request input is any one of an input to a mechanical button installed at the vehicle, an input to an icon displayed on the display, a voice input received through a microphone installed at the vehicle, or an input from a user device.

6. The electronic device of Claim 5,
wherein the memory further stores an instruction configured, when executed, to cause the processor to disable the operation in the vehicle entry state after the processor requests the payment from the server.

7. The electronic device of Claim 1,
wherein the memory further stores an instruction configured, when executed, to cause the processor to receive a vehicle information request signal through the communication circuit while operating in the vehicle entry state, and
to transmit vehicle information through the communication circuit in response to the received vehicle information request signal.

8. A system for in-vehicle payment service in a specific area, comprising:
an electronic device that is configured to operate in a vehicle entry state when entry of a vehicle into a specific area is confirmed and to request payment information from a server when a payment initiation condition is confirmed while operating in the vehicle entry state; and
a server that is configured to generate payment information in response to the request for the payment information of the vehicle and to provide the payment information to the electronic device,
wherein the electronic device is further configured to provide an interface for payment based on the payment information provided from the server and to request a payment from the server when a payment input from a user is detected on the provided interface for payment, and
the server is further configured to perform a payment process in response to the request for the payment.

9. The system of Claim 8, further comprising:
a vehicle access control system that is configured to acquire a vehicle plate number image of the vehicle and to transmit the vehicle plate number image to the server for a vehicle plate number recognition process.

10. The system of Claim 9,
wherein the server is configured to perform the vehicle plate number recognition process based on the vehicle plate number image received from the vehicle access control system, to provide the recognized vehicle plate number to the vehicle access control system, and to transmit entry approval information to the electronic device corresponding to the recognized vehicle plate number.

11. The system of Claim 10,
wherein the electronic device is configured to operate in the vehicle entry state when receiving the entry approval information from the server.

12. The system of Claim 11,
wherein the payment initiation condition includes at least one of when an engine start of the vehicle is detected, when the vehicle is driven for a predetermined period or more after the engine start, and when a payment request input from the user is detected.

13. The system of Claim 8,
wherein the payment request input is any one of an input to a mechanical button installed at the vehicle, an input to an icon displayed on the display, a voice input received through a microphone installed at the vehicle, or an input from a user device.

14. The system of Claim 12,
wherein the electronic device is configured to disable the operation in the vehicle entry state after requesting the payment from the server through a communication circuit.

15. The system of Claim 8,
wherein the server is configured to transmit a notification of payment completion to each of the electronic device and the vehicle access control system after processing the payment.

16. The system of Claim 15,
wherein the electronic device is configured to disable the operation in the vehicle entry state after receiving the notification of payment completion from the server.

17. The system of Claim 15,
wherein the vehicle access control system is configured to check a settlement of a fee and perform a vehicle exit process after receiving the notification of payment completion from the server.
